# EUROPÄISCHE PATENTSCHRIFT

(11) **EP 2 614 990 B1**
(45) Veröffentlichungstag und Bekanntmachung des Hinweises auf die Patenterteilung: **20.04.2016**
(21) Anmeldenummer: 13150494.6
(22) Anmeldetag: 08.01.2013
(51) Int. Cl.: B60P 3/12

(54) **Abschleppbrille für ein Abschleppfahrzeug und Verfahren zum Abschleppen eines Fahrzeugs**
Wheel lift for a tow vehicle and method for towing a vehicle
Lunette de remorquage pour un véhicule de remorquage et procédé de remorquage d'un véhicule

(30) Priorität: 12.01.2012 DE 102012100247
(43) Veröffentlichungstag der Anmeldung: 17.07.2013
(73) Patentinhaber: Krauss-Maffei Wegmann GmbH & Co. KG, 80997 München (DE)
(72) Erfinder: Weber, Jürgen, 50321 Brühl (DE); Keil, Norbert, 80997 München (DE); Lietz, Roland, 80997 München (DE)
(74) Vertreter: Feder Walter Ebert

(56) Entgegenhaltungen:
- WO-A1-84/00929
- DE-U1-202009 002 339
- US-A1- 2004 146 384

## Beschreibung

Die Erfindung betrifft eine Abschleppbrille zum Abschleppen eines Fahrzeugs mit einer Radaufnahme zur Aufnahme eines Rads des abzuschleppenden Fahrzeugs. Ferner betrifft die Erfindung ein Abschleppfahrzeug sowie ein Verfahren zum Abschleppen eines Fahrzeugs mit einer derartigen Abschleppbrille.

Abschleppfahrzeuge mit einer Abschleppbrille können im zivilen und militärischen Anwendungsbereich zur Bergung und/oder zum Abschleppen von Radfahrzeugen Verwendung finden. Abschleppbrillen werden auch als Abschleppgabeln oder Hubbrillen bezeichnet und weisen oftmals zwei Radaufnahmen auf, in welchen die Räder einer Achse des abzuschleppenden Fahrzeugs aufgenommen werden können. Über die Abschleppbrille können die in den Radaufnahmen aufgenommen Räder des Fahrzeugs angehoben werden, so dass das Fahrzeug an einem Ende aufgebockt und abgeschleppt werden kann.

Üblicherweise können die Radaufnahmen der Abschleppbrille auf einer dem abzuschleppenden Fahrzeug zugewandten Seite manuell geöffnet werden, so dass es möglich ist, die Räder des stehenden Fahrzeugs in die Radaufnahmen einzubringen. Hierzu können die geöffneten Radaufnahmen der Abschleppbrille zunächst derart an die Räder des abzuschleppenden Fahrzeugs angenähert werden, dass die Räder in die Radaufnahmen einfädeln. Anschließend können die Radaufnahmen über Steckbolzen manuell geschlossen und gesichert werden, um beim darauffolgenden Anheben der Radaufnahmen ein Herausrutschen der Fahrzeugräder aus den Radaufnahmen zu verhindern.

Bei derartigen Abschleppbrillen hat es sich als nachteilig herausgestellt, dass es erforderlich ist, dass sich die Besatzung des Abschleppfahrzeugs aus dem Abschleppfahrzeug begibt, um die Radaufnahme manuell zu öffnen und/oder zu schließen. Durch die manuelle Bedienung der Abschleppbrille gestaltet sich der Abschleppvorgang relativ zeitaufwändig, da die Abschleppbrille zunächst geöffnet, anschließend die Radaufnahme an das Rad des Fahrzeugs angenähert und dann wieder geschlossen werden muss.

Im militärischen Anwendungsbereich wird die Besatzung des Abschleppfahrzeugs bei der Bergung beschädigter Fahrzeuge erhöhten Gefahren ausgesetzt, da es während des Einbringens der Räder in die Radaufnahmen erforderlich ist, sich in einem ungeschützten Bereich außerhalb des Abschleppfahrzeugs aufzuhatten, um manuelle Tätigkeiten an der Abschleppbrille durchzuführen.

Die WO 84/00929 A1 beschreibt eine Hubbrille zum Abschleppen von Fahrzeugen mit drehbaren Reifenträgern gemäß dem Oberbegriff von Anspruch 1.

**Aufgabe** der Erfindung ist es, manuelle Tätigkeiten an der Abschleppbrille beim Abschleppvorgang zu verringern.

Bei einer Abschleppbrille der eingangs genannten Art wird die Aufgabe dadurch **gelöst,** dass die Abschleppbrille einen Antrieb zum Antreiben des Abrollelements und/oder eine Bremse zum Festlegen der Drehbewegung des Abrollelements umfasst.

Über das Abrollelement kann das Rad des Fahrzeugs beim Annähern der Abschleppbrille an das abzuschleppende Fahrzeug derart abrollen, dass das Rad in die Radaufnahme eingebracht wird. Das Abrollelement kann unter dem Rad des Fahrzeugs hindurch bewegbar sein. Es ist möglich, das Abrollelement zwischen dem Rad des Fahrzeugs und einem Untergrund, auf welchem das Fahrzeug steht, hindurchzudrücken. Das Einbringen des Rads des abzuschleppenden Fahrzeugs kann in die Radaufnahme allein durch die Annäherung der Radaufnahme an das abzuschleppende Fahrzeug erfolgen. Es ist daher nicht erforderlich, die Radaufnahme zu öffnen und/oder zu schließen. Die Besatzung des Abschleppfahrzeugs muss dieses nicht verlassen, um manuelle Tätigkeiten an der Abschleppbrille vorzunehmen.

Bevorzugt ist das Abrollelement als insbesondere zylindrische Rolle ausgebildet. Das Abrollelement kann um eine Abrollachse drehbar gelagert sein, welche parallel zu der Drehachse des aufzunehmenden Rads orientiert ist.

Zur Anordnung der Abschleppbrille an einem Abschleppfahrzeug kann die Abschleppbrille einen Koppelbereich zur Kopplung mit dem Abschleppfahrzeug aufweisen, welcher auf einer dem Abrollelement gegenüberliegenden Seite der Abschleppbrille angeordnet ist. Die Abschlepphilfe kann zwei Radaufnahmen aufweisen. Diese können über den Koppelbereich und/oder Querträger miteinander verbunden sein.

Im Hinblick auf das automatische Einbringen des Rads des abzuschleppenden Fahrzeugs in die Radaufnahme der Abschleppbrille hat sich folgendes als vorteilhaft erwiesen. Das Abrollelement der mit dem Abschleppfahrzeug gekoppelten Abschleppbrille kann in einem Bewegungsablauf in der Bewegungsrichtung des Abschleppfahrzeugs an das abzuschleppende Fahrzeug angenähert und unter das Rad des Fahrzeugs geführt werden. Alternativ kann die Annäherung der Radaufnahme an das Rad des abzuschleppenden Fahrzeugs über einen Antrieb der Abschleppbrille erfolgen, welcher die Radaufnahme relativ zu dem Koppelbereich der Abschleppbrille bewegt. Der Antrieb kann elektromotorisch, hydraulisch oder pneumatisch ausgestaltet sein. Besonders umfasst ist der Antrieb einen ein- oder mehrstufig teleskopierbaren Tragarm, der die Radaufnahme trägt.

Gemäß einer bevorzugten Ausgestaltung der Erfindung wird die Radaufnahme durch das Abrollelement begrenzt. Das Abrollelement kann derart im Randbereich der Radaufnahme angeordnet sein, dass ein in der Radaufnahme aufgenommenes Rad durch das Abrollelement in der Radaufnahme gehalten werden kann.

Um das Abrollen des Fahrzeugrads an dem Abrollelement beim Einbringen in die Radaufnahme zu unterstützen, ist das Abrollelement bevorzugt antreibbar ausgebildet. Der Antrieb des Abrollelements kann elektromotorisch, hydraulisch oder pneumatisch erfolgen. Durch ein angetriebenes Abrollelement kann das Rad des abzuschleppenden Fahrzeugs in die Radaufnahme gezogen werden. Es ist möglich, den Antrieb des Abrollelements fernbedienbar auszubilden, so dass die Bewegung des Abrollelements z. B. aus dem Inneren des Abschleppfahrzeugs gesteuert werden kann.

Nach dem Einbringen des Rads in die Radaufnahme kann es erforderlich werden, die Drehbewegung des Abrollelements festzulegen, um ein Herausrollen des Rads aus der Radaufnahme beim Anheben und/oder Abschleppen zu verhindern. Hierzu weist die Abschleppbrille bevorzugt eine Bremse zum Festlegen der Drehbewegung des Abrollelements auf. Durch das Festlegen des Abrollelements kann ein in der Radaufnahme aufgenommenes Rad, welches mit dem Abrollelement in Kontakt steht, derart fixiert werden, dass ein Herausrollen des Rads aus der Radaufnahme verhindert werden kann.

Es ist grundsätzlich möglich, die Abschleppbrille mit einer Radaufnahme feststehender Größe auszubilden. Um mit der Abschleppbrille möglichst viele unterschiedliche Fahrzeugtypen ziviler und militärischer Art abschleppen zu können, hat es sich jedoch als vorteilhaft erwiesen, wenn die Breite und/oder Länge der Radaufnahme zur Anpassung der Radaufnahme an das Rad des abzuschleppenden Fahrzeugs verstellbar ist. Die Größe der Radaufnahme kann derart verstellbar sein, dass Fahrzeuge mit Rädern unterschiedlicher Größe abgeschleppt werden können. Bevorzugt ist die Breite und/oder Länge der Radaufnahme fernbedienbar verstellbar, so dass die Verstellung aus dem Innenraum des Abschleppfahrzeugs gesteuert werden kann. Das Verstellen der Breite und/oder Länge der Radaufnahme kann über einen elektromotorischen, hydraulischen oder pneumatischen Antrieb erfolgen.

Zur Anpassung der Radaufnahme an den Durchmesser des aufzunehmenden Rads weist die Abschleppbrille bevorzugt ein Abrollelement auf, welches in einer Richtung senkrecht zu seiner Abrollachse verschiebbar an der Radaufnahme angeordnet ist. Das Verschieben des Abrollelements kann über einen Hydraulikzylinder erfolgen. Alternativ kann ein elektromotorischer oder pneumatischer Antrieb vorgesehen sein.

Neben dem Durchmesser ihrer Räder können sich Fahrzeuge auch durch ihre Spurbreite, d. h., den Abstand ihrer Räder in Querrichtung, unterscheiden. Um die Abschleppbrille an unterschiedliche Spurbreiten adaptieren zu können, weist die Abschleppbrille vorteilhafterweise zwei Radaufnahmen auf, deren Abstand zueinander einstellbar ist. Die Einstellung des Abstands kann insbesondere fernbedienbar z. B. mittels eines elektromotorischen, hydraulischen oder pneumatischen Antriebs erfolgen.

Ein weiterer Gegenstand der der Erfindung ist ein Abschleppfahrzeug der eingangs genannten Art. Bei einem derartigen Abschleppfahrzeug kann die Aufgabe durch eine erfindungsgemäße, bereits beschriebene Abschleppbrille gelöst werden.

Ferner betrifft die Erfindung ein Verfahren zum Abschleppen eines Fahrzeugs der eingangs genannten Art. Bei einem derartigen Verfahren trägt es zur Lösung der Aufgabe bei, wenn ein Rad des Fahrzeugs zum Einbringen in die Radäufnahme an einem drehbar gelagerten Abrollelement der Radaufnahme abgerollt wird, wobei das Abrollelement mittels eines Antriebs angetrieben wird und/oder wobei die Drehbewegung des Abrollelements anschließend mittels einer Bremse festgelegt wird.

Bei dem erfindungsgemäßen Verfahren und dem erfindungsgemäßen Fahrzeug ergeben sich dieselben Vorteile, die bereits im Zusammenhang mit der erfindungsgemäßen Abschleppbrille beschrieben worden sind.

Gemäß einer bevorzugten Ausgestaltung des Verfahrens wird das Rad des abzuschleppenden Fahrzeugs beim Annähern des Abschleppfahrzeugs an das abzuschleppende Fahrzeug in die Radaufnahme eingebracht. Durch die Bewegung des Abschleppfahrzeugs an das abzuschleppende Fahrzeug heran, kann das Rad an dem Abrollelement der Radaufnahme abgerollt werden.

Bevorzugt wird das Abrollelement unter das Rad des abzuschleppenden Fahrzeugs geschoben, so dass das Rad an dem Abrollelement abrollen kann und in die Radaufnahme eintreten kann.

Ferner ist es vorteilhaft, wenn die Abschleppbrille mit dem abzuschleppenden Fahrzeug angehoben wird. In angehobenem Zustand kann das Fahrzeug nach Art eines Einachsanhängers durch das Abschteppfahrzeug abgeschleppt werden. Das Anheben des abzuschleppenden Fahrzeugs kann mit einem an der Abschleppbrille oder am Abschleppfahrzeug angeordneten Antrieb erfolgen, welcher bevorzugt ferngesteuert wird.

Bei dem erfindungsgemäßen Abschleppfahrzeug und dem erfindungsgemäßen Verfahren können ferner die im Zusammenhang mit der erfindungsgemäßen Abschleppbrille beschriebenen vorteilhaften Ausgestaltungen zur Anwendung kommen.

Weitere Vorteile und Einzelheiten der Erfindung werden im Folgenden anhand eines in den Figuren dargestellten Ausführungsbeispiels beschrieben. Hierin zeigt:
- Fig. 1: eine Abschleppbrille in einer schematischen Draufsicht;
- Fig. 2: eine Radaufnahme der Abschleppbrille in seitlicher Ansicht; und
- Fig. 3-9: ein Abschleppfahrzeug mit einer Abschleppbrille sowie ein abzuschleppendes Fahrzeug zur Veranschaulichung der Vorgänge beim Abschleppen.

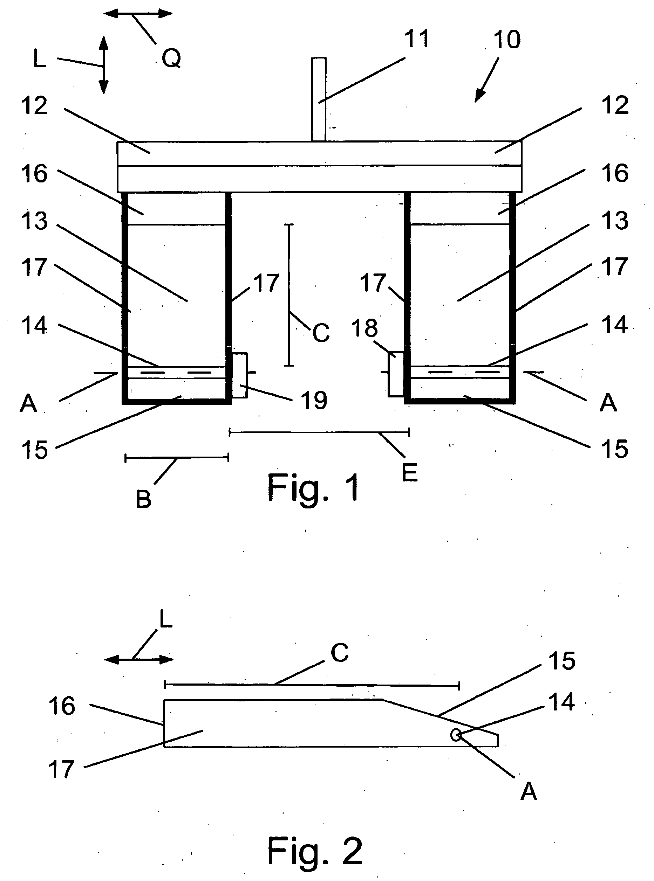

In der Fig. 1 ist eine Abschleppbrille 10 nach Art einer Schnellabschleppbrille dargestellt, welche an einem Abschleppfahrzeug 1 angeordnet werden kann. Hierzu weist die Abschleppbrille 10 einen Koppelbereich 11 auf, in welchem in der Fig. 1 nicht dargestellte Befestigungselemente zur lösbaren Befestigung der Abschleppbrille 10 an dem Fahrzeug angeordnet sind.

Der Koppelbereich 11 ist mit einer Querstange 12 verbunden, welche sich im Wesentlichen in einer Richtung Q erstreckt, die quer zur Fahrtrichtung des Abschleppfahrzeugs 1 orientiert ist. Die Querstange 12 kann parallel zu einer Vorder- oder Rückseite des Abschleppfahrzeugs 1 angeordnet werden. An der Querstange 12 sind auf einer dem Koppelbereich 11 gegenüberliegenden Seite der Querstange 12 zwei Radaufnahmen 13 angeordnet. In den Radaufnahmen 13 können zwei Räder 2.1 einer Achse eines abzuschleppenden Fahrzeugs 2 aufgenommen werden.

Um die Räder 2.1 in die Radaufnahmen 13 einbringen zu können, ohne dass manuelle Tätigkeiten an den Radaufnahmen 13 durchgeführt werden müssen, ist an den Radaufnahme 13 jeweils ein Abrollelement 14 vorgesehen, an welchem ein Rad 2.1 des Fahrzeugs 2 abrollbar ist. Das Abrollelement 14 ist als zylindrische Rolle ausgestaltet, welche um eine Abrollachse A drehbar gelagert ist. Die Abrollachse A ist parallel zu der Richtung Q orientiert. Über das Abrollelement 14 kann ein Rad 2.1 des abzuschleppenden Fahrzeugs 2 in einer Richtung L abgerollt werden, welche quer zu der Abrollachse A orientiert ist.

Das Abrollelement 14 ist auf einer dem Koppelbereich 11 der Abschleppbrille gegenüberliegenden Seite der Abschleppbrille 10 in einem Abrollbereich 15 angeordnet. Der Abrollbereich 15 ist beim Aufnehmen der Räder 2.1 des Fahrzeugs 2 in der Radaufnahme 13 dem abzuschleppenden Fahrzeug 2 zugewandt.

Auf einer dem Abrollbereich 15 gegenüberliegenden Seite der Radaufnahme 13 ist eine feststehende Begrenzungsstange 16 vorgesehen. Über die Begrenzungsstange 16 und das Abrollelement 14 wird die Radaufnahme 13 in einer Längsrichtung L der Abschleppbrille 10 begrenzt. In einer Richtung parallel zur Abrollachse A des Abrollelements 14 wird die Radaufnahme 13 durch zwei Seitenstangen 17 begrenzt, welche ein Herausrutschen eines in der Radaufnahme 13 aufgenommenen Rads 2.1 in Richtung der Abrollachse A verhindern.

Ein in die Radaufnahme 13 eingebrachtes Rad 2.1 kann von der Begrenzungsstange 16 und dem Abrollelement 14 in der Radaufnahme 13 gehalten und somit in der Radaufnahme 13 festgelegt werden. An dem Abrollelement 14 ist hierzu eine Bremse 19 vorgesehen, über welche die Drehbewegung des Abrollelements 14 festlegbar ist. Über die Bremse 19 kann eine Radsicherung bereitgestellt werden, die verhindert, dass das Rad 2.1 aus der Radaufnahme 13 herausrollt.

Das Abrollelement 14 kann ferner über einen Antrieb 18 angetrieben werden, der elektromotorisch, hydraulisch oder pneumatisch ausgebildet ist, so dass das Rad 2.1 durch das angetriebene Abrollelement 14 in die Radaufnahme 13 hineingezogen werden kann. Beim Abladen des Fahrzeugs 2 kann es vorteilhaft sein, das Abrollelement 14 durch den Antrieb 18 in derart umgekehrter Drehrichtung zu drehen, dass das Rad 2.1 aus der Radaufnahme 13 hinausbefördert wird.

Die Bremse 19 und der Antrieb 18 sind aus Gründen der Übersichtlichkeit in der Fig. 1 jeweils nur an einem der Abrollelemente 11 dargestellt. Es ist aber möglich, beide Abrollelemente 14 der Abschleppbrille 10 sowohl mit einem Antrieb 18 und/oder einer Bremse 19 auszustatten.

In der vergrößerten Seitenansicht der Radaufnahme 13 gemäß Fig. 2 ist ersichtlich, dass die Seitenstange 17 der Abschleppbrille 10 im Abrollbereich 15 rampenartig ausgebildet ist. Das Abrollelement 14 einer Radaufnahme 13 ist jeweils drehbar in den Seitenstangen 17 der Radaufnahme 13 gelagert.

Zur Adaption der Abschleppbrille 10 an unterschiedliche Fahrzeuge 2 ist sowohl die Breite B der Radaufnahme 13 in Querrichtung Q als auch die Länge C der Radaufnahme 13 in Längsrichtung L über einen Antrieb verstellbar. Zur Verstellung der Länge C der Radaufnahme 13 ist das Abrollelement 14 in Richtung L verschiebbar an der Radaufnahme 13 angeordnet. An der Radaufnahme 13 ist eine Gewindespindel angeordnet, über welche die Bewegung des Abrollelements 14 bewirkt wird. Alternativ kann ein hydraulischer oder pneumatischer Antrieb vorgesehen sein.

Darüber hinaus kann die Breite B der Radaufnahme 13 durch das Verschieben der Seitenstangen 17 gegeneinander in Querrichtung Q verändert werden. Hierzu ist an der Abschleppbrille 10 ein weiterer Antrieb vorgesehen, welcher elektromotorisch, hydraulisch oder pneumatisch ausgebildet sein kann.

Die Verstellung der Breite B und Länge C der Radaufnahme 13 kann fernbedienbar aus dem Innenraum des Abschleppfahrzeugs erfolgen. Es ist daher nicht erforderlich, manuelle Tätigkeiten an der Abschleppbrille zur Anpassung der Radaufnahme 13 an das Rad 2.1 des abzuschleppenden Fahrzeugs 2 vorzunehmen. Das Abschleppfahrzeug weist zur Fernbedienung ein entsprechendes Steuergerät auf. Ferner kann im hinteren Bereich des Fahrzeugs 1 und/oder an der Abschleppbrille 10 eine Kamera angeordnet sein, deren Bilder auf einem Anzeigegerät im Inneren des Fahrzeugs 1 darstellbar sind.

Um die Abschleppbrille 10 auf verschiedene Spurweiten unterschiedlicher Fahrzeuge 2 einzustellen, kann ferner der Abstand E der beiden Radaufnahmen 13 zueinander eingestellt werden. Hierzu sind die Radaufnahmen 13 an der Querstange 12 verschiebbar gelagert. Die Radaufnahmen 13 können über einen Antrieb in Querrichtung Q bewegt werden. Auch dieser Antrieb kann elektromotorisch, hydraulisch oder pneumatisch ausgebildet sein und ferngesteuert bedient werden.

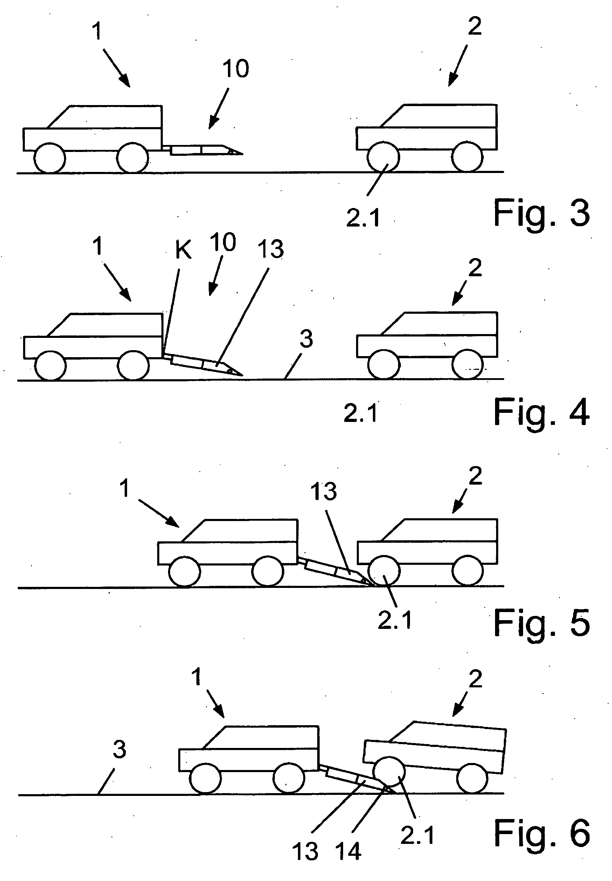

Im Folgenden soll anhand der Darstellungen in der Fig. 3 bis 9 das erfindungsgemäße Verfahren zum Abschleppen eines Fahrzeugs 2 anhand eines militärischen Abschleppfahrzeugs und eines weiteren militärischer Fahrzeugs 2 beschrieben werden. Im militärischen Anwendungsbereich bietet die erfindungsgemäße Abschleppbrille 10 den Vorteil, dass sich die Besatzung des Abschleppfahrzeugs 1 nicht aus dem geschützten Bereich im Inneren des Abschleppfahrzeugs 1 begeben muss, um ein Fahrzeug 2 zu bergen:

Die Fig. 3 zeigt ein gepanzertes, militärisches Abschleppfahrzeug 1 mit einer erfindungsgemäßen Abschleppbrille 10 sowie ein gepanzertes, militärisches Fahrzeug 2, welches geborgen werden soll. Das Fahrzeug 2 ist beispielsweise in Folge eines Beschusses fahruntüchtig geworden.

Zum Abschleppen des Fahrzeugs 2 durch das Abschleppfahrzeug 1 wird zunächst die Abschleppbrille 10 über einen Antrieb um eine Achse K schräg nach unten geschwenkt, so dass die Radaufnahmen 13 der Abschleppbrille 10 an den Untergrund 3, auf welchem sich das abzuschleppende Fahrzeug 2 befindet, angenähert werden. Dieser Vorgang ist in der Fig. 4 dargestellt.

Wie in der Fig. 5 ersichtlich, wird das Abschleppfahrzeug 1 anschließend mit der Abschleppbrille 10 in Richtung des Fahrzeugs 2 bewegt, so dass die Radaufnahmen 13 an die Räder 2.1 des Fahrzeugs 2 angenähert werden. Die Abschleppbrille 10 wird so lange in Richtung des Fahrzeugs 2 bewegt, bis die Abrollelemente 14 in Kontakt mit den vorderen Rädern 2.1 des Fahrzeugs 2 geraten. Alternativ kann das abzuschleppende Fahrzeug 2 über eine Seilwinde des Abschleppfahrzeugs 1 an dieses angenähert werden.

Zum Einbringen der Räder 2.1 des Fahrzeugs 2 in die Radaufnahmen 13 werden nun, wie in Fig. 6 gezeigt, die drehbar gelagerten Abrollelemente 14 in den Bereich zwischen den Rädern 2.1 und dem Untergrund 3 geführt, so dass die Räder 2.1 des Fahrzeugs 2 an den Abrollelementen 14 abrollen und in die Radaufnahmen 13 eingebracht werden. Optional können die Abrollelemente 14 über den Antrieb derart gedreht werden, dass die Räder 2.1 in die Radaufnahme befördert werden. Anschließend werden die Abrollelemente 14 jeweils über eine Bremse festgelegt, so dass die Räder 2.1 jeweils zwischen der Begrenzungsstange 16 und dem festgelegten Abrollelement 14 in der Radaufnahme 14 fixiert sind.

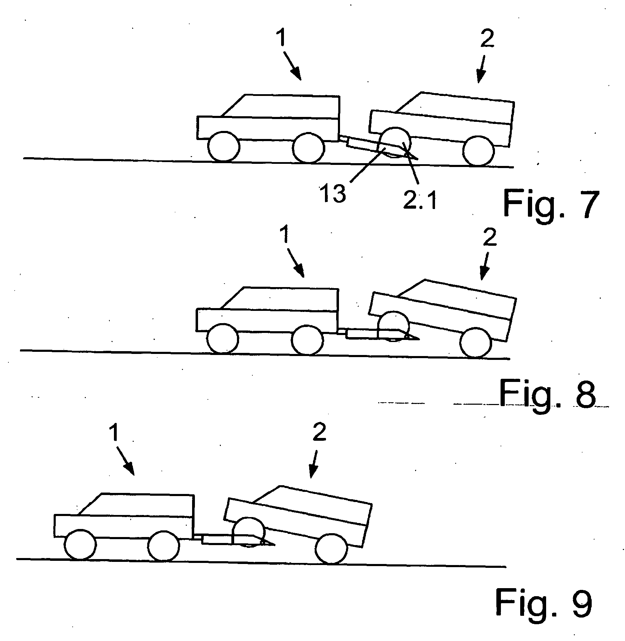

Wie ferner in der Fig. 7 und Fig. 8 dargestellt, wird die Abschleppbrille nach dem Einbringen der Räder 2.1 in die Radaufnahmen 13 angehoben, so dass sich das Fahrzeug 2 in einer aufgebockten Stellung befindet. Hierzu kann an der Abschleppbrille ein Antrieb vorgesehen sein, welcher hydraulisch, elektromotorisch oder pneumatisch ausgebildet ist.

Es ist nunmehr möglich, wie in der Fig. 9 dargestellt, das Fahrzeug 2 mit dem Abschleppfahrzeug 1 nach Art eines Einachsanhängers abzuschleppen und ggf. aus dem Gefahrenbereich zu entfernen.

Alle vorstehend geschilderten Vorgänge können durch die Besatzung des Abschleppfahrzeugs 1 aus dem geschützten Innenraum des Abschleppfahrzeugs 1 heraus ferngesteuert werden, so dass sowohl die Besatzung des fahruntüchtigen Fahrzeugs 2 als auch die Besatzung des Abschleppfahrtzeugs im Zuge des Abschleppvorgangs ihr Fahrzeug 1, 2 nicht verlassen muss.

Nachdem das Fahrzeug 2 in einen sicheren Bereich, z. B. ein Feldlager abgeschleppt worden ist, kann das Fahrzeug 2 von der Abschleppbrille 10 abgeladen werden, in dem die beschriebenen Vorgänge in umgekehrter Reihenfolge ausgeführt werden. Beim Abladen können die Abrollelemente 14 optional in umgekehrter Richtung angetrieben werden, so dass die Räder 2.1 aus den Radaufnahmen 13 ausgebracht werden.

Die vorstehend beschriebene Abschleppbrille 10 weist eine Radaufnahme 13 mit einem drehbar gelagerten Abrollelement 13 auf, an welchem das Rad 2.1 des Fahrzeugs 2 zum Einbringen in die Radaufnahme 13 abrollbar ist. Es ist daher nicht erforderlich, die Radaufnahme 13 zu öffnen und/oder zu schließen. Die Besatzung des Abschleppfahrzeugs 1 muss dieses so wenig wie möglich verlassen, um manuelle Tätigkeiten an der Abschleppbrille 10 vorzunehmen.

### Bezugszeichen:

- 1: Abschleppfahrzeug
- 2: Fahrzeug
- 2.1: Rad
- 3: Untergrund
- 10: Abschleppbrille
- 11: Koppelbereich
- 12: Querstange
- 13: Radaufnahme
- 14: Abrollelement
- 15: Abrollbereich
- 16: Begrenzungsstange
- 17: Seitenstange
- 18: Antrieb
- 19: Bremse

- A: Abrollachse
- B: Breite
- C: Länge
- E: Abstand
- K: Achse
- L: Längsrichtung
- Q: Querrichtung

## Patentansprüche

1. Abschleppbrille zum Abschleppen eines Fahrzeugs (2) mit einer Radaufnahme (13) zur Aufnahme eines Rads (2.1) des abzuschleppenden Fahrzeugs (2), wobei die Radaufnahme (13) ein drehbar gelagertes Abrollelement (14) aufweist, an welchem das Rad (2.1) des Fahrzeugs (2) zum Einbringen in die Radaufnahme (13) abrollbar ist,
**gekennzeichnet durch**
einen Antrieb (18) zum Antreiben des Abrollelements (14) und/oder eine Bremse (19) zum Festlegen der Drehbewegung des Abrollelements (14).

2. Abschleppbrille nach Anspruch 1, **gekennzeichnet durch** einen Koppelbereich (11) zur Kopplung mit einem Abschleppfahrzeug (1), welcher auf einer dem Abrollelement (14) gegenüberliegenden Seite der Abschleppbrille (10) angeordnet ist.

3. Abschleppbrille nach einem der vorhergehenden Ansprüche, **dadurch gekennzeichnet, dass** die Radaufnahme (13) durch das Abrollelement (14) begrenzt wird.

4. Abschleppbrille nach einem der vorhergehenden Ansprüche, **dadurch gekennzeichnet, dass** die Breite und/oder Länge der Radaufnahme (13) zur Anpassung der Radaufnahme (13) an das Rad (2.1) des abzuschleppenden Fahrzeugs (2) insbesondere fernbedienbar verstellbar ist.

5. Abschleppbrille nach einem der vorhergehenden Ansprüche, **dadurch gekennzeichnet, dass** das Abrollelement (14) in einer Richtung (Q) senkrecht zu seiner Abrollachse (A) verschiebbar an der Radaufnahme (13) angeordnet ist.

6. Abschleppbrille nach einem der vorhergehenden Ansprüche, **gekennzeichnet durch** zwei Radaufnahmen (13), deren Abstand (E) zueinander einstellbar ist.

7. Abschleppfahrzeug mit einer Abschleppbrille (10) nach einem der vorhergehenden Ansprüche.

8. Verfahren zum Abschleppen eines Fahrzeugs (2) mit einer Abschleppbrille (10) eines Abschleppfahrzeugs (1), die eine Radaufnahme (13) zur Aufnahme eines Rads (2.1) des abzuschleppenden Fahrzeugs (2) aufweist, **dadurch gekennzeichnet,**
**dass** ein Rad (2.1) des Fahrzeugs (2) zum Einbringen in die Radaufnahme (13) an einem drehbar gelagerten Abrollelement (14) der Radaufnahme (13) abgerollt wird, wobei das Abrollelement (14) mittels eines Antriebs (18) angetrieben wird und/oder wobei die Drehbewegung des Abrollelements (14) anschließend mittels einer Bremse (19) festgelegt wird.

9. Verfahren nach Anspruch 8, **dadurch gekennzeichnet, dass** das Rad (2.1) des abzuschleppenden Fahrzeugs (2) beim Annähern des Abschleppfahrzeugs (1) an das abzuschleppende Fahrzeug (2) in die Radaufnahme (13) eingebracht wird.

10. Verfahren nach einem der Ansprüche 8 bis 9, **dadurch gekennzeichnet, dass** das Abrollelement (14) unter das Rad (2.1) des abzuschleppenden Fahrzeugs (2) geschoben wird.

11. Verfahren nach einem der Ansprüche 8 bis 10, **dadurch gekennzeichnet, dass** die Abschleppbrille (10) mit dem abzuschleppenden Fahrzeug (2), insbesondere ferngesteuert, angehoben wird.

## Claims

1. Wheel lift for towing a vehicle (2), comprising a wheel receptacle (13) for receiving a wheel (2.1) of the vehicle (2) to be towed, wherein the wheel receptacle (13) has a rotatably mounted rolling element (14) on which the wheel (2.1) of the vehicle (2) can be rolled in order to introduce it into the wheel receptacle (13), **characterized by** a drive (18) for driving the rolling element (14) and/or a brake (19) for arresting the rotary movement of the rolling element (14).

2. Wheel lift according to Claim 1, **characterized by** a coupling region (11) for coupling to a tow vehicle (1), which coupling region (11) is arranged on a side of the wheel lift (10) opposite to the rolling element (14).

3. Wheel lift according to one of the preceding claims, **characterized in that** the wheel receptacle (13) is bounded by the rolling element (14).

4. Wheel lift according to one of the preceding claims, **characterized in that**, in order to adapt the wheel receptacle (13) to the wheel (2.1) of the vehicle (2) to be towed, the width and/or length of the wheel receptacle (13) is adjustable, in particular in a remotely controllable manner.

5. Wheel lift according to one of the preceding claims, **characterized in that** the rolling element (14) is arranged on the wheel receptacle (13) so as to be displaceable in a direction (Q) perpendicular to its rolling axis (A).

6. Wheel lift according to one of the preceding claims, **characterized by** two wheel receptacles (13) whose spacing (E) from one another is adjustable.

7. Tow vehicle having a wheel lift (10) according to one of the preceding claims.

8. Method for towing a vehicle (2) with a wheel lift (10) of a tow vehicle (1), which wheel lift (10) has a wheel receptacle (13) for receiving a wheel (2.1) of the vehicle (2) to be towed, **characterized in that** a wheel (2.1) of the vehicle (2) is rolled on a rotatably mounted rolling element (14) of the wheel receptacle (13) in order to introduce it into the wheel receptacle (13), wherein the rolling element (14) is driven by means of a drive (18) and/or wherein the rotary movement of the rolling element (14) is then arrested by means of a brake (19).

9. Method according to Claim 8, **characterized in that**, when the tow vehicle (1) is being brought close to the vehicle (2) to be towed, the wheel (2.1) of the vehicle (2) to be towed is introduced into the wheel receptacle (13).

10. Method according to either of Claims 8 and 9, **characterized in that** the rolling element (14) is pushed under the wheel (2.1) of the vehicle (2) to be towed.

11. Method according to one of Claims 8 to 10, **characterized in that** the wheel lift (10), together with the vehicle (2) to be towed, is raised, in particular by remote control.

## Revendications

1. Lunette de remorquage pour le remorquage d'un véhicule (2) avec un logement de roue (13) pour le logement d'une roue (2.1) du véhicule à remorquer (2), dans lequel le logement de roue (13) présente un élément de roulement (14) logé de manière rotative, sur lequel la roue (2.1) du véhicule (2) peut rouler pour l'introduction dans le logement de roue (13),
**caractérisée par**
un entraînement (18) pour l'entraînement de l'élément de roulement (14) et/ou un frein (19) pour la fixation du mouvement de rotation de l'élément de roulement (14).

2. Lunette de remorquage selon la revendication 1, **caractérisée par** une zone de couplage (11) pour le couplage avec un véhicule de remorquage (1) qui est agencé sur un côté opposé à l'élément de roulement (14) de la lunette de remorquage (10).

3. Lunette de remorquage selon l'une quelconque des revendications précédentes, **caractérisée en ce que** le logement de roue (13) est délimité par l'élément de roulement (14).

4. Lunette de remorquage selon l'une quelconque des revendications précédentes, **caractérisée en ce que** la largeur et/ou la longueur du logement de roue (13) peut être réglée en particulier de manière télécommandable pour l'adaptation du logement de roue (13) à la roue (2.1) du véhicule à remorquer (2).

5. Lunette de remorquage selon l'une quelconque des revendications précédentes, **caractérisée en ce que** l'élément de roulement (14) est agencé dans une direction (Q) perpendiculaire à son axe de roulement (A) de manière mobile sur le logement de roue (13).

6. Lunette de remorquage selon l'une quelconque des revendications précédentes, **caractérisée par** deux logements de roue (13), dont la distance (E) l'un par rapport à l'autre peut être réglée.

7. Véhicule de remorquage avec une lunette de remorquage (10) selon l'une quelconque des revendications précédentes.

8. Procédé pour le remorquage d'un véhicule (2) avec une lunette de remorquage (10) d'un véhicule de remorquage (1), lequel présente un logement de roue (13) pour le logement d'une roue (2.1) du véhicule à remorquer (2), **caractérisé en ce que**
une roue (2.1) du véhicule (2) roule sur un élément de roulement (14) du logement de roue (13) logé de manière rotative pour l'introduction dans le logement de roue (13), l'élément de roulement (14) étant entraîné à l'aide d'un entraînement (18) et/ou le mouvement de rotation de l'élément de roulement (14) étant ensuite fixé à l'aide d'un frein (19).

9. Procédé selon la revendication 8, **caractérisé en ce que** la roue (2.1) du véhicule à remorquer (2) est introduite dans le logement de roue (13) lors de l'approche du véhicule de remorquage (1) vers le véhicule à remorquer (2).

10. Procédé selon l'une quelconque des revendications 8 à 9, **caractérisé en ce que** l'élément de roulement (14) est poussé sous la roue (2.1) du véhicule à remorquer (2).

11. Procédé selon l'une quelconque des revendications 8 à 10, **caractérisé en ce que** la lunette de remorquage (10) est relevée, en particulier par télécommande, avec le véhicule à remorquer (2).
